## Europäisches Patentamt

## European Patent Office

## Office européen des brevets

(19)

(11) Publication number: **0 126 301**
**B1**

# EUROPEAN PATENT SPECIFICATION

(12)

(45) Date of publication of patent specification: **05.04.89**

(51) Int. Cl.⁴: **H 04 L 25/03**

(21) Application number: **84104394.6**

(22) Date of filing: **18.04.84**

(54) **Adaptive equalizer for digital signals.**

(30) Priority: **19.04.83 IT 6742483**

(43) Date of publication of application:
**28.11.84 Bulletin 84/48**

(45) Publication of the grant of the patent:
**05.04.89 Bulletin 89/14**

(84) Designated Contracting States:
**BE CH DE FR GB LI NL SE**

(56) References cited:
**US-A-3 311 836**
**US-A-3 633 014**
**US-A-3 665 171**

**IEEE TRANSACTIONS ON INFORMATION THEORY, vol. IT-26, no. 3, May 1980, pages 316-326, IEEE, New York, US; TSUN-YEE YAN et al.: "A multiplication-free solution for linear minimum mean-square estimation and equalization using the branch-and-bound principle"**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Pirani, Giancarlo**
**C.so Mediterraneo, 140**
**Torino (IT)**
Inventor: **Zingarelli, Valerio**
**C.so Marconi, 4**
**Torino (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

(56) References cited:
**CONFERENCE RECORD, IEEE INTERNATIONAL CONFERENCE ON COMMUNICATIONS, ICC'82, The Digital Revolution, Philadelphia, 13th-17th June 1982, vol. 2, pages 4B.3.1-4B.3.5, IEEE, New York, US; G. PIRANI et al.: "Multiplication-free equalizers for multipath fading channels"**

Courier Press, Leamington Spa, England.

**Description**

The present invention concerns apparatuses for telecommunications systems with very high transmission rate and in particular it relates to an adaptive equalizer for digital signals, particularly suited to receiving apparatuses in digital radio links.

Digital-technique expansion for signal and data processing has made it necessary, among other things, the development of digital microwave radio links which high capacity.

It is known that electromagnetic wave propagation through the atmosphere is highly dependent on the refractive index of the medium. Such parameter, which actually is a random variable, varies with altitude and metheorological conditions, causing the formation of the so called "atmospheric ducts" into which electromagnetic waves are canalized.

Moreover there are cases in which a portion of the signal irradiated by the transmitting antenna arrives at the receiving antenna reflected by natural obstacles.

Then it happens that under anomalous propagation conditions the received electromagnetic signal consists of a possible direct ray (the ray which has propagated without undergoing reflections), added to the contributions of all the rays guided by successive reflections.

The combination of these contributions determines amplitude and phase distortions of channel transfer function which degrade the transmitted signal characteristics.

The higher the transmission rate and more complex the adopted modulation techniques the higher the resulting degradations due to the distortions above.

To overcome these disadvantages different techniques of adaptive equalization have been studied which can be subdivided into two big families: intermediate frequency equalization and base band equalization.

Intermediate frequency equalization techniques studied up to now are generally conceptually and technologically simpler with respect to baseband equalization techniques, chiefly for high transmission rate, but they are not able to always assure a good compensation of channel distortions when:—

selective fadings are associated with a non-minimum phase channel (wherein the signal component with highest amplitude is not that which has undergone the minimum propagation delay);

distortions to be compensated do not coincide with the distortions the channel usually introduces and for which the equalizer has been designed;

the differences among the delays of the signal components which are added in reception are great.

On the contrary baseband equalization technique does not suffer from these limitations. That equalization is in fact capable of compensating the distortions even in case of non-minimum phase channels, it requires no definition of a particular channel model and can be efficient even when delay differences among the received signal components are great. .

Baseband equalization methods which offer optimal performances (i.e. maximum likelihood estimate of received sequences or Kalman filtering) are very complex to implement, hence they have been applied to far chiefly in modems for data transmission through telephone lines.

At highest transmission rates presently adopted in digital radio links (140—200 Mbit/s) the choice between baseband systems is limited, due to obvious technological reasons, to feedback equalization of the decisions and to transversal filter equalization.

The main problem of decision feedback filter resides not only in the conceptual and computing complexity of a feedback structure, but also in the possible error propagation. This phenomenon is due to the fact that the symbols outgoing from the decision circuit are used for cancelling the intersymbol interference due to post cursor symbols, so that, if a decision is wrong, instead of the cancellation a double intersymbol interference is obtained and the error probability in the near future is increased.

Among transversal filter equalization systems for radio links a number is known in which the delay line and multipliers are implemented with analog devices (S. Takenaka et alii, "A transversal fading equalizer for a 16-QAM microwave digital radio", IEEE Int. Conference on Communications, Denver, Co, pages 46. 2. 1-46. 2. 5, 14—18 June, 1981; Y. L. Kuo et alii, "A baseband adaptive equalizer for a 16-state QAM digital system over master group band analog networks", IEEE Globecom Conference, pages F. 3. 6. 1-F. 3. 6. 5, Miami, Florida, 29 Nov.—2 Dec. 1982; e C. L. Ghao et alii "A comparative performance evaluation of slope equalizer and decision-directed weight control equalizers", pages F. 3. 4. 1-F. 3. 4. 7, ibidem).

That makes them rather critical and expensive, as the analog multipliers for high transmission rates are difficult to adjust and of considerable complexity.

Also the transversal filters implemented with usual digital techniques result too complex and expensive at high transmission rates, chiefly owing to the multiplying devices they need. Transversal filters which do not need the use of multipliers and which can therefore be used also in systems with high transmission rates, have been studied for different applications (G. Pirani, V. Zingarelli "Multiplication-free equalizers for multipath fading channels" IEEE International Conf. On Communications, pages 4B. 3. 1-4B. 3. 5, Philadelphia, Pa, 13—18 June 1982; G. Pirani et alii "Multiplication-free filters for subband coding of speech", IEEE International Symp. on Circuits and Systems, 10—14 May 1982) but without the capacity of automatically adapting itself so as to compensate for time variable distortions typical of radio channels.

These advantages are overcome by the present invention which concerns a method and a device for the adaptive equalization of communications channels wherethrough the digital signals are transmitted,

EP 0 126 301 B1

which can be set up at the baseband with fully digital techniques, which does not require the use of multipliers and hence it can be applied to a very-high transmission rates, and can automatically be adapted to compensate for time variable distortions, with an adaptation speed sufficient to the transmission requirements of microwave terrestrial radio links.

The equalizer coefficients are in fact computed in real-time according to an optimization algorithm obliging them to be powers of two, so that the operations of multiplication of signal samples by the coefficients of the transversal equalizer are effected by a simple shifting operation of the binary encoded signal samples in a shift register.

The present invention provides a method for the adaptive equalization of digital signals, according to which the signals coming from a transmission channel to be equalized are sampled by an analog-to-digital converter, the sampls are filtered in a transversal filter and the samples outgoing from that transversal filter are sent to a decision device, wherein a block of said samples is extracted at the output of the analog-to-digital converter and their convolution by an initial set of coefficients (c) is effected, the result being used to determine a first mean square error, hence for each coefficient $(c_i)$ a suitable increment and decrement are effected by a first and a second quantity, respectively, and the new mean square errors of the so-modified coefficient sets are determined, obtaining in this way the optimal values $\overline{(c_i)}$ of each coefficient $(c_i)$, then the result is approximated to the nearest power of two and is immediately substituted in the set of coefficients for determining the following coefficient, thus obtaining a new set consisting only of powers of two, then the mean square error of said new set of coefficients is determined and, if it results to be inferior than the above-mentioned first mean square error, the new set of coefficients is transferred to the transversal filter.

Preferably, the optimal values $\overline{(c_i)}$ of each coefficient $(c_i)$ are computed one by one according to the expression

$$\overline{c_i} = -\tfrac{1}{2} \cdot \frac{c_{i2}^2 \cdot (\varepsilon_3 - \varepsilon_1) - c_{i3}^2 \cdot (\varepsilon_2 - \varepsilon_1)}{c_{i2} \cdot (\varepsilon_3 - \varepsilon_1) + c_{i3} \cdot (\varepsilon_2 - \varepsilon_1)}$$

by means of three points with ordinates equal to mean square errors $(\varepsilon_1, \varepsilon_2, \varepsilon_3)$ and abscissae equal to the respective values of the coefficients $(c_{i1}, c_{i2}, c_{i3})$.

The present invention provides also the adaptive equalizer apt to implement the method.

The above and further characteristics of the present invention will be made clearer by the following description of a preferred embodiment thereof, given by way of example and not in a limiting sense, and by the annexed drawings in which:—

Figure 1 is a comprehensive scheme of the receiving system in which the adaptive equalizer is used;

Figure 2 is a block diagram of the transversal filter structure used in adaptive equalizer;

Figure 3 is a block diagram of the device denoted by PA in Figure 1;

Figure 4 is a block diagram of the simulating device denoted by SE in Figure 3.

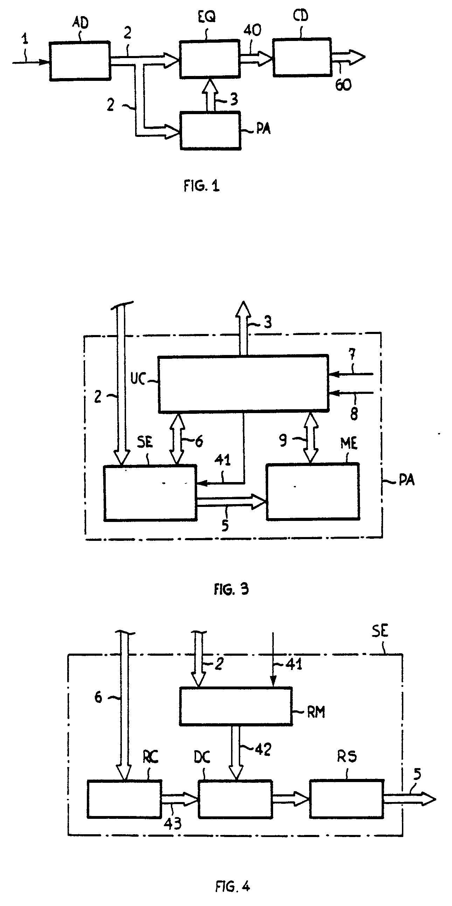

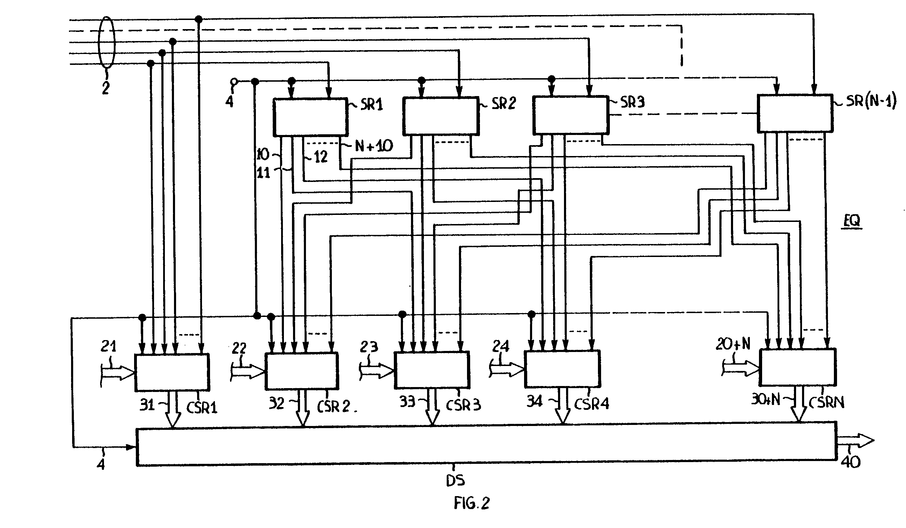

In the comprehensive scheme of the receiving system depicted in Figure 1, AD denotes an analog-to-digital converter converting the analog signal arriving from channel 1 into a series of samples represented by n-bit binary words. The sampling rate is equal at least to the symbol rate. At the output of AD, denoted by 2, there are connected the equalization digital transversal filter EQ and the device PA for computing and updating the coefficients of filter EQ.

The signal outgoing from EQ is sent to a usual decision circuit CD estimating the transmitted symbols. Circuit PA, on the basis of the signal samples it receives from AD through connection 2, computes as will be seen hereinafter, the coefficients adapting EQ to the received signal. Said coefficients are sent from PA to EQ through connection 3.

The structure of the digital transversal filter is shown in Figure 2. The n-bit binary words, coming from the analog-to-digital converter through n-wire connection 2, access a digital delay line composed of N-1 delay cells, implemented with shift-registers SR1, SR2, SR3...SR (N-1) where N is the number of coefficients c of the filter.

Each wire of connection 2 carries a bit of the word representing the sample. Each bit accesses the serial input of the corresponding register (the first bit accesses SR1, the second bit accesses SR2, and so on) and at each clock pulse is subsequently transferred from the first to the last output wire of each register, respectively denoted by 10, 11, 12...N+10 for SR1. The clock signal having a frequency equal to the symbol frequency, is rendered available on wire 4. Each of the n output wires of registers SR1, SR2, etc. is connected to the respective input of the parallel type of other shift registers, denoted by CSR2, CSR3, CSR4...CSRN (CSR2 is connected to the first outputs of all the registers SR, CSR3 is connected to the second outputs of all the registers SR, etc.). Shift registers CSR, with parallel input and output, effect the multiplications by powers-of-two corresponding to the transversal filter coefficients, effecting the necessary shift operations on the word coming from the delay line. The shift number is equal to the exponent of the respective power-of-two coefficient.

The information relating to the exponent value is transferred to registers CSR through connections 21, 22, 23, 24...20+N, forming bus 3.

The word at the input of each of the above registers CSR arrives at the output shifted by a number of positions equal to the coefficient exponent.

3

Register CSR1 differs from the other only in the connection of the input leads, directly connected to bus 2. The binary words at the parallel outputs of registers CSR, connected to connections 31, 32, 33, 34...30+N, are finally added up by binary adder DS. The result is present on connection 40 and consists of a m-bit binary word.

Figure 3 represents the computing device denoted by PA in Figure 1. PA has the task of adaptively computing coefficients c of the transversal filter in order to minimize the mean square error between the result $\hat{a}_1$ of the decision on transmitted symbol $a_1$, made by decision device CD, and the sample of signal $y_1$ at the filter output.

Generally, the mean square error is the following:

$$\varepsilon(c)=E[(y_i-a_i)^2]=c^T \cdot A \cdot c - 2\sigma^2 h^T c + \sigma^2$$

where $c$ is N-dimension vector of the transversal filter coefficients;
E indicates the statistic-average operation on the quantity $(y_i-a_i)^2$;
T is the superscript which indicates the matrix transposition of vector $c$ and $h$;
$\sigma^2$ is the variance of the information symbols transmitted;
$h$ is the vector of samples $h_i$ of the pulse response of the channel;
$A$ is the co-variance matrix of dimensions N×N which takes into account the pulse response of the channel, of the variance of the thermal channel noise, and of the variance of the quantization noise produced by converter AD (Figure 1).

The generic element of matrix $A$ of position I, m, has the following expression:

$$A_{l,m}=\sigma^2 \cdot \sum_{k=1}^{N} h_{k-1} \cdot h_{k-m}+\sigma_R^2+\sigma_Q^2$$

where $\sigma_R^2$ is thermal-noise variance and $\sigma_Q^2$ is the quantization-noise variance.

The mean-square error may be re-written in function of each single coefficient $c_i$ of the transversal filter EQ, keeping all the other coefficients constant.

The expression of the above mean-square error $\varepsilon(c_1)$ is the following:

$$\varepsilon(c_i)=B \cdot c_i^2+2 \cdot D \cdot c_i+F$$

where B, D and F are constants depending on the other N—1 coefficients, on the samples of the pulse response $h_1$, on the variance of thermal noise $\sigma_R^2$ and on the variance of transmitted symbols $\sigma^2$.

The expressions of these constants are the following ones:

$$B= \sum_{k=1}^{N} h_{k-1}^2+\sigma_R^2/\sigma^2$$

$$D=(\sum_{k=1}^{N} \cdot \sum_{\substack{j=1 \\ j\neq i}}^{N} c_j \cdot h_{k-i} \cdot h_{k-j})-h_{-i}$$

$$F=(\sum_{k=1}^{N} \cdot \sum_{j=1}^{N} \cdot \sum_{p=1}^{N} c_j \cdot c_p \cdot h_{k-j} \cdot h_{k-p})+1-2. \sum_{\substack{j=1 \\ j\neq i}}^{N} c_j \cdot h_{-j}+\sigma_R^2/\sigma^2 \sum_{\substack{j=1 \\ j\neq i}}^{N} c_j^2$$

The mean-square error $\varepsilon(c_i)$ is a parabolic function of $c_1$. The parabola minimum coincides with the error minimum corrsponding to optimum value $\overline{c_i}$ of coefficient $c_1$. The value of coefficient $\overline{c_1}$ may be computed from the knowledge of the coordinates of three parabola points which are denoted by $P_1(\varepsilon_1, c_{i1})$, $P_2(\varepsilon_2, c_{i2})$, $P_3(\varepsilon_3, c_{i3})$; the expression of $\overline{c_1}$ is the following:

$$\overline{c_i}=-\tfrac{1}{2} \cdot \frac{c_{i2}^2 \cdot (\varepsilon_3-\varepsilon_1)-c_{i3}^2 \cdot (\varepsilon_2-\varepsilon_1)}{c_{i2} \cdot (\varepsilon_3-\varepsilon_1)+c_{i3} \cdot (\varepsilon_2-\varepsilon_1)}$$

It is worth underlining that mean-square errors $\varepsilon_1$, $\varepsilon_2$, $\varepsilon_3$ are not computed according to preceding formulas, but in real time by device PA as described below.

The adaptive coefficient computation is based on previously stated concepts and proceeds as follows, PA generates at the beginning a set of values for all the coefficients $(c_1, c_2...c_N)$, then it considers the first coefficient $c_1$ as the only variable coefficient keeping other N-1 coefficients constant.

By means of the value of $c_1$, it computes the value of $\varepsilon(c_1)$; the pair $(\varepsilon_1, c_1)$ supplies the coordinates of point $P_1$, then PA decrements by a quantity $\alpha$, supplied as input datum, the coefficient $c_1$, obtaining the abscissa $c_1-\alpha$ of point $P_2$ and the corresponding ordinate $\varepsilon(c_1-\alpha)$.

Third point $P_3$ is obtained by incrementing $c_1$ by a quantity $\beta$, supplied as input datum, and computing the corresponding $\varepsilon(c_1+\beta)$. It is now possible to compute the optimal value $\overline{c_1}$ through the formula above. Computed value $\overline{c_1}$ is now rounded to the nearest power of two $\overline{c_{1a}}$ and the new set of coefficients having as first value $\overline{c_{1a}}$ is obtained. Starting from the set thus obtained, the same operation is repeated for all the other coefficients, obtaining each time an optimal coefficient which is rounded to the first power-of-two and inserted in the coefficient set of the transversal filter.

After computing the N-th coefficient, it is checked whether the mean-square error due to the new coefficient set, consisting of powers of two, is less than the mean-square error due to the set of previously available coefficients. If this is true the new coefficient set is transferred to the transversal filter.

A new block of samples may now be considered at the output of the channel and a new set of coefficients is to be computed to follow the channel variations.

The described operations are effected by the device PA for computing and updating the coefficients. It consists of three fundamental blocks, as depicted in Figure 3.

SE denotes a transversal filter simulator, permitting the test of the various coefficients $c_1$, $c_2$...,$c_N$ according to the described procedure.

At the end of the iterations said coefficients are transferred to filter EQ (Figure 1). A suitable control signal is supplied through wire 41. Greater details of this simulators will be stated afterwards, during the description of the following Figure.

ME denotes a device for measuring the mean-square errors at the output 5 of simulator SE. ME can be implemented with known methods, allowing the mean-square error $\varepsilon_1$ to be computed at the i-th instant according to the running-average formula:

$$\varepsilon_i = \varepsilon_{i-1} \cdot \frac{i-1}{i} + \frac{(y_i - \hat{a}_i)^2}{i}$$

where

$i=1, 2...$

Finally UC denotes the computing unit, which controls the operation of the whole adaptive equalizer, effecting the computation of optimal coefficients $\overline{c_i}$ according to the formula above and deciding when to effect the coefficient transfer from simulator SE, to which it is bidirectionally connected through bus 6, to filter EQ (Figure 1), to which it is connected through bus 3. Besides unit UC receives through bus 9 from device ME the values of mean-square errors computed and through connections 7 and 8 input data $\alpha$ and $\beta$.

Figure 4 shows simulator SE. Bus 2 supplies the binary words representing the signal samples extracted and converted into digital form by AD (Figure 1). Said words are the same as supplied to filter EQ (Figure 1). A register RM memorizes a block of these, composed by instance of 150 words, and remains inhibited to further memorizations for the time necessary to computing unit UC (Figure 3) to decide the transfer of a new coefficient set to filter EQ.

Computing unit UC decides the transfer of the just computed coefficient set if the mean-square error relating to such set is less than that relating to the old one. After each computation of a new coefficient set a new block of signal samples is extracted.

The signal which controls this time is supplied through wire 41. The connection of output 42 of RM is connected to a device DC, apt to effect the convolution between the abovementioned block of words and the coefficient set present at the output 43 of a register RC. RC memorizes the coefficients supplied by computing unit UC through bus 6 to simulator SE. The convolution operation:

$$C(i) = \sum_{k=1}^{N} c_k, r_{i-k}$$

$i=N+1,... N+150$

where $r_j$ is the signal sample at the jth sampling instant at the equalizer input, can be carried out in a known way with a device effecting the necessary operations of multiplication and storage. The words supplied by DC are memorized in a register RS to be supplied to device ME through connection 5.

Unit UC (Figure 3) is the computing and control unit of the entire adaptive equalizer. It is implemented through a processing unit containing in its memory the type and times of the different operation phases.

UC through connection 41 (Figure 3) sends a signal to simulator SE to get the block of samples present on bus 2 stored in register RM (Figure 4).

At the same time UC sends the set of initial coefficients $c=(c_1, c_2,...c_N)$ to register RC of SE (Figure 4).

At this point device DC of SE effects the convolution among the block of samples stored in RM and the set of coefficients stored in RC. The result is stored in RS.

Device ME (Figure 3) computes then the mean-square error relating to the signal stored in RS. This error is transferred through bus 9 to computing unit UC, where it is memorized and compared afterwards with the mean-square error relating to the new set of coefficients directly computed at the procedure end. According to the comparison result UC decides whether to effect or not the coefficient transfer from PA to EQ.

UC examines one by one the initial coefficients, as previously described, and on each it effects a suitable increment and decrement equal to quantities $\beta$ and $\alpha$, respectively. Then it transfers to SE the set of coefficients where the i-th coefficient has been modified by $\alpha$ or $\beta$ and makes SE and ME calculate the relative mean-square error.

In this way UC obtains the three points necessary to compute the parabola vertex, which has been previously mentioned. The so computed vertex abscissa is the optimum value of the i-th coefficient involved, which is immediately rounded to the nearest power of two.

This operation is repeated for all the N coefficients.

At the end one obtains a set of powers of two. With this last set of coefficients UC makes SE and ME compute the corresponding mean-square error, which is afterwards compared with the mean-square error computed at the beginning.

If this last error is less than the first, UC effects the transfer of the power-of-two coefficients from PA to EQ.

At this point UC commands the transfer of a new block of samples from converter AD to PA and the same adaptation operations are repeated.

By the described adaptive equalizer, one can track the typical variations of the microwave radio channel. In fact the radio channels subject to selective fadings have an amplitude variation rate non higher than 100 dB/s.

If the transmission rate is, by instance, of 35 Mbaud, which corresponds to a symbol period equal to about 30 ns, the channel amplitude variation in a symbol period is at worst of about 3 $\mu$dB. That is why before the amplitude distortion of the channel changes by some tenth decibels, some thousand symbols are received which permits the described adaptive equalizer to adapt the coefficients.

**Claims**

1. Method for the adaptive equalization of digital signal, according to which the signals coming from a transmission channel (1) to be equalized are sampled by an analog-to-digital converter (AD), the samples are filtered in a transversal filter (EQ) and the samples outgoing from that transversal filter are sent to a decision device (CD), characterized in that a block of said samples is extracted at the output of the analog-to-digital converter (AD) and their convolution by an initial set of coefficients ($c$) is effected, the result being used to determine a first mean square error, hence for each coefficient ($c_i$) a suitable increment and decrement are effected by a first ($\beta$) and a second ($\alpha$) quantity, respectively, and the new mean square errors of the so-modified coefficient sets are determined, obtaining in this way the optimal values $\overline{(c_i)}$ of each coefficient ($c_i$), then the result is approximated to the nearest power of two and is immediately substituted in the set of coefficients for determining the following coefficient, thus obtaining a new set consisting only of powers of two, then the mean square error of said new set of coefficients is determined and, if it results to be inferior than the above-mentioned first mean square error, the new set of coefficients is transferred to the transversal filter (EQ).

2. Method as in Claim 1, characterized in that the optimal values $\overline{(c_i)}$ of each coefficient ($c_i$) are computed one by one according to the expression

$$\overline{c_i} = -\tfrac{1}{2} \cdot \frac{c_{i2}^2 \cdot (\varepsilon_3 - \varepsilon_1) - c_{i3}^2 \cdot (\varepsilon_2 - \varepsilon_1)}{c_{i2} \cdot (\varepsilon_3 - \varepsilon_1) + c_{i3} \cdot (\varepsilon_2 - \varepsilon_1)}$$

by means of three points (P1, P2, P3) with ordinates equal to mean square errors ($\varepsilon_1$, $\varepsilon_2$, $\varepsilon_3$) and abscissae equal to the respective values of the coefficients ($c_{i1}$, $c_{i2}$, $c_{i3}$).

3. Adaptive equalizer apt to implement the method of Claim 1 or 2, said equalizer comprising an analog-to-digital converter (AD) connected to a transmission channel (1) and issuing blocks of samples at the output (2), a transversal filter (EQ) receiving the output samples issued by the analog-to-digital converter (AD), and a decision device (CD) receiving the samples supplied from the output (40) of the transversal filter (EQ), characterized by a first register (RM) for storing said block of samples and a second register (RC) for storing a set of coefficients adapting the transversal filter (EQ) to the received signal, these registers belonging to a simulator (SE) of a transversal filter, the outputs of said first and second register being connected to inputs of a device (DC) apt to effect their convolution, which is supplied for storing to a third register (RS), whose output is connected to a device (ME) for the measurement of the mean square errors, said device delivering digital signals resulting from the measurement at its output (9) connected to a computing unit (UC), controlling said simulator (SE), said device (ME) for the measurement of mean square errors and said transversal filter (EQ) and apt to effect the determination of the optimal values for each of the coefficients ($c_i$) with predetermined values of first ($\beta$) and second ($\alpha$) quantities effecting an increment or decrement, respectively, and also apt to supply said sets of coefficients at outputs (3, 6) connected to the first register (RC) and said transversal filter (EQ).

4. Adaptive equalizer as in Claim 3, characterized in that said transversal filter (EQ) consists of a first plurality of shift registers (SR1,..., SR(N−1)) apt to set up a delay line for the binary words representing the samples, of a second plurality of shift registers (CSR1,..., CSRN) apt to effect the digital multiplications of the binary words by the power-of-two coefficients (c), effecting a number of shifts of each word equal to the exponent of the coefficients above, and of a binary-addition device (DS) whose inputs are connected to the outputs of said second plurality of registers.

## Patentansprüche

1. Verfahren zur adaptiven Entzerrung digitaler Signale, bei dem die von einem Übertragungskanal (1) kommenden zu entzerrenden Signale von einem Analog/Digital-Umsetzer (AD) abgetastet werden, die Abtastwerte in einem Transversalfilter (EQ) gefiltert werden und die vom Transversalfilter ausgehenden Abtastwerte einer Entscheidungsschaltung (CD) zugeführt werden, dadurch gekennzeichnet, daß man einen Block der Abtastwerte am Ausgang des Analog/Digital-Umsetzers (AD) abnimmt und ihr Konvolutionsprodukt mit einer anfänglichen Gruppe von Koeffizienten ($c$) bewirkt, das Ergebnis zur Bestimmung eines ersten mittleren Quadratfehlers verwendet, dann für jeden Koeffizienten ($c_i$) eine entsprechende Erhöhung und eine Erniedrigung um eine erste ($\beta$) beziehungswiese zweite ($\alpha$) Menge durchführt und die neuen mittleren Quadratfehler der so modifizierten Gruppe von Koeffizienten bestimmt und auf diese Weise die Optimalwerte ($\overline{c_i}$) jedes Koeffizienten ($c_i$) erhält, woraufhin man das Ergebnis an die nächste Zweierpotenz annähert und ihn sogleich in der Gruppe von Koeffizienten ersetzt, um den folgenden Koeffizienten zu bestimmen, und so eine neue Gruppe von Koeffizienten erhält, die nur aus Zweierpotenzen bestehen, und man dann den mittleren Quadratfehler der neuen Gruppe von Koeffizienten bestimmt und, wenn dies zu einem niedrigeren Wert als dem oberen beschriebenen ersten mittleren Quadratfehler führt, die neue Gruppe von Koeffizienten zum Transversalfilter (EQ) überträgt.

2. Verfahren nach Anspruch 1, dadurch gekennzeichnet, daß man die Optimalwerte ($\overline{c_i}$) jedes Koeffizienten ($c_i$) einzeln gemäß dem Ausdruck berechnet:

$$\overline{c_i}=-\tfrac{1}{2}\cdot\frac{c^2_{i2}\cdot(\varepsilon_3-\varepsilon_1)-c^2_{i3}\cdot(\varepsilon_2-\varepsilon_1)}{c_{i2}\cdot(\varepsilon_3-\varepsilon_1)+c_{i3}\cdot(\varepsilon_2-\varepsilon_1)}$$

wofür drei Punkte (P1, P2, P3) mit Ordinatenwerten gleich den mittleren Quadratfehlern ($\varepsilon_1$, $\varepsilon_2$, $\varepsilon_3$) und Abszissenwerten gleich den jeweiligen Werten der Koeffizienten ($c_{i1}$, $c_{i2}$, $c_{i3}$) herangezogen werden.

3. Adaptiver Entzerrer zur Durchführung des Verfahrens nach Ansprüche 1 oder 2, mit einem an einen Übertragungskanal (1) angeschlossenen Analog/Digital-Umsetzer (AD), der an seinem Ausgang (2) Blöcke von Abtastwerten abgibt, einem diese Ausgangs-Abtastwerte des Analog/Digital-Umsetzers (AD) empfangenden Transversalfilter (EQ) und einer Entscheidungsvorrichtung (CD), die die vom Ausgang (40) des Transversalfilters (EQ) abgegebenen Abtastwerte empfängt, gekennzeichnet, durch ein erstes Register (RM) zum Speichern des Blocks von Abtastwerten und ein zweites Register (RC) zum Speichern einer Gruppe von Koeffizienten, die das Transversalfilter (EQ) an das empfangene Signal adaptieren, wobei diese Register zu einem Transversalfilter-Simulator (Se) gehören und die Ausgänge des ersten und des zweiten Registers mit den Eingängen einer ihr Konvolutionsprodukt bewirkenden Vorrichtung (DC) verbunden sind, das dann anschließend zum Einspeichern an ein drittes Register (RS) gesendet wird, dessen Ausgang mit einer der Messung des mittleren Quadratfehlers dienenden Vorrichtung (ME) verbunden ist, die aus der Messung resultierende Digitalsignale an ihrem Ausgang (9) abgibt, der mit einer Recheneinheit (UC) verbunden ist, welche den Simulator (SE), die Vorrichtung (ME) zur Messung des mittleren Quadratfehlers und das Transversalfilter (EQ) steuert und die Bestimmung der Optimalwerte für jeden den Koeffizienten ($c_i$) mit vorgegebenen Werten der ersten Menge ($\beta$) und die zweiten Menge ($\alpha$) durchführt und dadurch eine Erhöhung bzw. Erniedrigung bewirkt, und die Gruppen von Koeffizienten an Ausgängen (3, 6), die mit dem ersten Register (RC) und dem Transversalfilter (EQ) verbunden ist, abgeben kann.

4. Adaptiver Entzerrer nach Anspruch 3, dadurch gekennzeichnet, daß das Transversalfilter (EQ) aus einer ersten Anzahl von Schieberegistern (SR1..., SR(N−1)), die eine Verzögerungsstrecke für die die Abtastwerte darstellenden binären Wörter darstellt, einer zweiten Anzahl von Schieberegistern (CSR1,..., CSRN), die die digitalen Multiplikationen der binären Wörter mit den Zweierpotenz-Koeffizienten (c) durchführen, indem sie eine Anzahl von Verschiebungen jedes Worts gleich dem Exponenten dieses Koeffizienten bewirken, und aus einem binärem Addierer (DS), dessen Eingänge mit den Ausgängen der zweiten Register verbunden sind, besteht.

## Revendications

1. Procédé pour l'égalisation adaptative des signaux numériques, selon lequel les signaux qui proviennent de la ligne de transmission (1) à égaliser sont échantillonnés par un convertisseur analogique-numérique (AD) et les échantillons sont filtrés dans un filtre transversal (EQ), et les échantillons sortant dudit filtre transversal sont enfin envoyés à un dispositif de décision (CD), caractérisé en ce que l'on prélève un bloc desdits échantillons à la sortie du convertisseur analogique-numérique (AD) et on effectue leur convolution pour un ensemble initial de coefficients (c), le résultat étant utilisé pour calculer une première erreur quadratique moyenne, ensuite, pour chaque coefficient $(c_i)$, on effectue une incrémentation et une décrémentation convenables d'une première $(\beta)$ et d'une deuxième $(\alpha)$ quantité, respectivement, et on calcule les nouvelles erreurs quadratiques moyennes des ensembles des coefficients ainsi modifiés, en obtenant de cette manière les valeurs optimals $(\overline{c_i})$ de chaque coefficient $(c_i)$, ensuite on arrondit le résultat à la puissance de deux la plus proche et on le remplace immédiatement dans l'ensemble des coefficients pour le calcul du coefficient suivant, ce qui donne un nouvel ensemble constitué seulement de puissances de deux, ensuite on calcule l'erreur quadratique moyenne de ce nouvel ensemble des coefficients et, si elle s'avère être inférieure à ladite première erreur quadratique moyenne, on transfère le nouvel ensemble de coefficients au filtre transversal (EQ).

2. Procédé selon la revendication 1, caractérisé en ce que les valeurs optimales $(\overline{c_i})$, de chaque coefficient $(c_i)$ sont calculées une à une suivant l'expression

$$\overline{c_i} = -\tfrac{1}{2} \cdot \frac{c^2_{i2} \cdot (\varepsilon_3 - \varepsilon_1) - c^2_{i3} \cdot (\varepsilon_2 - \varepsilon_1)}{c_{i2} \cdot (\varepsilon_3 - \varepsilon_1) + c_{i3} \cdot (\varepsilon_2 - \varepsilon_1)}$$

au moyen de trois points $(P_1, P_2, P_3)$ ayant des ordonnées égales eux erreurs quadratiques moyennes $(\varepsilon_1, \varepsilon_2, \varepsilon_3)$ et des abscisses égales aux valeurs respectives des coefficients $(c_{i1}, c_{i2}, c_{i3})$.

3. Egaliseur adaptatif apte à réaliser le procédé de la revendication 1 ou 2, qui comprend un convertisseur analogique-numérique (AD) connecté à une ligne de transmission (1), et qui fournit des blocs d'échantillons à la sortie (2), un filtre transversal (EQ) qui reçoi les échantillons de sortie émis par le convertisseur analogique-numérique (AD), et un dispositif de décision (CD) qui reçoit les échantillons fournis par la sortie du filtre transversal (EQ), caractérisé par un premier registre (RM) pour stocker ledit bloc d'échantillons et un deuxième registre (RC) pour stocker un ensemble de coefficients qui adaptent le filtre transversal (EQ) au signal reçu, lesdits registres appartenant à un simulateur (SE) d'un filtre transversal, les sorties desdits premier et deuxième registres étant connectés aux entrées d'un dispositif (DC), apte à en effectuer la convolution, qui est mémorisée dans un troisième registre (RS), dont la sortie est connectée à un dispositif (ME) pour la mesure des erreurs quadratiques moyennes, ledit dispositif envoyant les signaux numériques résultant de la mesure à sa sortie (9) connectée à une unité de traitement (UC), pour controler ledit simulateur (SE), ledit dispositif (ME) pour la mesure des erreurs quadratiques moyennes et ledit filtre transversal (EQ), et apte à effectuer la détermination des valeurs optimales pour chacun des coefficients $(c_i)$ avec des valeurs prédetérminées desdites première $(\beta)$ et deuxième $(\alpha)$ quantités en effectuant une incrémentation au décrémentation, respectivement, et apte aussi à envoyer lesdits ensembles de coefficients aux sorties (3, 6) connectés au premier registre (RC) et audit filtre transversal (EQ).

4. Egaliseur adaptatif selon la revendication 3, caractérisé en ce que ledit filtre transversal (EQ) est constitué par une première pluralité de registres à décalage (SR1,..., SR(N−1)) aptes à réaliser une ligne de retard pour les mots binaires représentant les échantillons, par une deuxième pluralité de registres à décalage (CSR1,..., CSRN) aptes à effectuer des multiplications numériques des mots binaires par des coefficients (c) puissances de deux, en effectuant un nombre de décalages de chaque mot égal à l'exposant desdits coefficients, et par un dispositif de somme binaire (DS) dont les entrées sont connectées aux sorties de ladite deuxième pluralité de registres.

FIG. 1

FIG. 3

FIG. 4

FIG.2